# EUROPÄISCHE PATENTSCHRIFT

(11) **EP 1 257 604 B1**
(45) Veröffentlichungstag und Bekanntmachung des Hinweises auf die Patenterteilung: **08.04.2009**
(21) Anmeldenummer: 01911489.1
(22) Anmeldetag: 17.01.2001
(51) Int. Cl.: C09C 1/02, C01F 11/46

(54) **BARIUMSULFAT, VERFAHREN ZU DESSEN HERSTELLUNG UND DESSEN VERWENDUNG**
BARIUM SULPHATE, METHOD FOR PRODUCING SAME AND THE USE THEREOF
SULFATE DE BARYUM, SON PROCEDE DE FABRICATION ET SON UTILISATION

(30) Priorität: 09.02.2000 DE 10005685
(43) Veröffentlichungstag der Anmeldung: 20.11.2002
(73) Patentinhaber: Sachtleben Chemie GmbH, 47198 Duisburg (DE)
(72) Erfinder: AMIRZADEH-ASL, Djamschid, 47445 Moers (DE); SCHWARZ, Karl-Heinz, 47495 Rheinberg (DE)
(74) Vertreter: Uppena, Franz
(86) Internationale Anmeldenummer: PCT/EP2001/000453
(87) Internationale Veröffentlichungsnummer: WO 2001/058809

(56) Entgegenhaltungen:
- EP-A- 0 293 622
- EP-A- 0 335 159
- DE-A- 3 635 050
- DE-A- 4 404 953
- GB-A- 2 151 538
- US-A- 5 149 732
- DATABASE WPI Section Ch, Week 198435 Derwent Publications Ltd., London, GB; Class A82, AN 1984-215815 XP002172499 & JP 59 124958 A (HARIMA KASEI KOGYO KK), 19. Juli 1984 (1984-07-19)

## Beschreibung

Die Erfindung betrifft ein Verfahren zur Herstellung von Bariumsulfat mit einem mittleren Teilchendurchmesser d₅₀ von 0,1 bis 10 µm, ausgefällt durch Vermischung von barium- oder sulfathaltiger Lösung, und dessen Verwendung.

Solches Bariumsulfat wird insbesondere für die Herstellung von Fotopapieren, Lacken und Kunststoffen sowie in der medizinischen Diagnostik und in medizinischen Kunststoffen eingesetzt. Für den medizinischen Anwendungsbereich sind neben den hohen Reinheitsanforderungen auch gesetzlich verankerte Anforderungen für Pharmaprodukte einzuhalten. Das Bariumsulfat ist ein hochwertiger, reinweißer, inerter, säure- und alkalifester Füllstoff, der absolut wetterbeständig ist.

Das feinstteilige Bariumsulfat verleiht Fotopapieren Farbstabilität und Glanz. Bei der Verwendung in Lacken verursacht das feinstteilige Bariumsulfat eine flockenstabilisierende Wirkung auf organische und anorganische Pigmente, so dass Entmischungserscheinungen weitgehend verhindert, Farbtiefe und Farbreinheit erhöht und Glanz und Glanzschleier verbessert werden. Darüber hinaus werden durch die nukleierende Wirkung des Bariumsulfatpulvers die mechanischen Eigenschaften der Kunststoffe verbessert.

In verstreckten Folien aus thermoplastischen Kunststoffen, insbesondere Polymeren mit darin eingearbeitetem feinstteiligem Bariumsulfat, wirkt dieses als Weißpigment durch Lichtstreuung an den Grenzflächen der Bariumsulfatteilchen zu Luft, so dass die Folien eine opake Einfärbung und einen hohen Glanz besitzen. Als thermoplastischer Kunststoff kommt insbesondere Polyester in Betracht, in den im allgemeinen bei der Polykondensation Bariumsulfat enthaltende Glycol-Suspension eingearbeitet wird. Dabei ist eine ausreichende Dispergierung der Bariumsulfatteilchen im Polyester eine wesentliche Voraussetzung für Opazität und hohen Glanz der verstreckten Filme. Im Falle nicht ausreichender Dispergierung der Bariumsulfatteilchen im Polymeren bilden sich nach dem Verstrecken Stippen, das sind Agglomerate von Bariumsulfatteilichen, die die Beschaffenheit der Folienoberfläche erheblich beeinträchtigen können.

Die DE-A-26 47 713 beschreibt einen opaken einfachen thermoplastischen Filmträger aus einem molekular orientierten Film eines synthetischen, linearen Polyesters, in den 5 bis 50 Gew.-%, bezogen auf das Gewicht des Polyesters, Bariumsulfatteilchen mit einer durchschnittlichen Teilchengröße von 0,5 bis 10 µm dispergiert sind, mit der Maßgabe, dass die tatsächliche Teilchengröße von 99,9 % der Teilchen 50 µm nicht überschreitet und wenigstens eine lichtempfindliche Abbildungsschicht auf wenigstens einer Filmträgeroberfläche angeordnet ist

Diese Filmträger sind für Feuchtigkeit hoch undurchlässig und daher für die Verwendung als Träger für fotografische Abzüge und Kopien geeignet, für die ein erheblicher Anteil des Waschvorgangs, welcher normalerweise für die Behandlung von Abzügen und Kopien auf Papierträgern angewandt werden muss, vermieden werden kann.

Aus der DE-C-44 31 735 ist bekannt, Bariumsulfatteilchen mit Phosphorpentoxid, Aluminiumoxid und Siliciumoxid zu beschichten, um eine hervorragende Haftung zwischen den als Füllstoff dienenden Bariumsulfatteilchen und dem Polymeren zu erzielen, so dass die Lichtstreuung unterbleibt.

In der DE-A-22 46 818 ist ein kontinuierliches Verfahren zur Herstellung von kristallinem Bariumsulfatpulver mit einer mittleren Teilchengröße d₅₀ > 2 µm bis 20 µm durch Fällung von Bariumsulfat aus Bariumchloridlösung mit Schwefelsäure vorgesehen, wobei die Bariumsulfatteilchen mit der angestrebten Teilchengröße in dem Austrag des Fällgefäßes sedimentieren und die kleineren Bariumsulfatteilchen in der oberen Zone des Fällgefäßes verbleiben.

Gegenstand der DE-A-36 35 050 ist ein Verfahren zur kontinuierlichen Herstellung von Bariumsulfat mit definiertem Komspektrum, wobei in einer ersten Stufe durch Reaktion von Bariumionen mit Sulfationen Bariumsulfat ausfällt, die Bariumsulfat enthaltende Suspension abgezogen und in eine ein- oder mehrstufige Nassmahlstufe überführt wird, in der die Aufmahlung auf das gewünschte Kornspektrum erfolgt. Anschließend werden Bariumsulfat und Mutterlauge getrennt.

Das nach den bekannten Verfahren chemisch gefällte Bariumsulfatpulver neigt in nachteiliger Weise zur Bildung von Agglomeraten, die eine homogene Dispergierung der Bariumsulfatteilchen als Weißpigment und/oder Füllstoff in thermoplastischen Kunststoffen verhindern.

Es ist die Aufgabe der vorliegenden Erfindung, Bariumsulfat mit einer mittleren Teilchengröße d₅₀ von 0,1 bis 10 µm, ausgefällt durch Vermischung von barium- und sulfathaltiger Lösung bereitzustellen, das keine Neigung zur Bildung von Agglomeraten aufweist und demzufolge bezüglich Dispergierbarkeit und Stippenfreiheit ausgezeichnete Eigenschaften aufweist und eine optimale Folienoberfläche bewirkt.

Die Lösung dieser Aufgabe erfolgt durch ein Verfahren zur Herstellung von Bariumsulfat mit einer mittleren Teilchengröße d₅₀ von 0,1 bis 10 µm, bei dem barium- und sulfathaltige Lösung vermischt wird, der abgetrennte Filterkuchen in Wasser suspendiert, die Suspension mit organischem Additiv vermischt und dann in einem Sprüh- oder Mahltrockner getrocknet wird, wobei das organische Additiv ausgewählt wird aus einem oder mehreren der Stoffe, bzw. Stoffgruppen: Carbonsäuren, Alkohole, mehrwertige Alkohole, wie Pentaerythrit, Neopentylglycol und Trimethylpropanol, Polyalkohole wie Polypropylenglycol und Polyethylenglycol, organische Ester, wie Neopentyl-Glycol-Dibenzoat, organische Sulfone mit der Formel RSO₂R, organische Ketone (R-(C=O)-R), organische Nitrile (RCN), organische Sulfoxide (R₂-SO), organische Amide (R-(C=O)-NR'R oder R-(S=O)-ONR'R).

Der Anteil an organischem Additiv beträgt 0,1 bis 30 Gew.-%, bevorzugt 0,1 bis 10 Gew.-%, bezogen auf den Anteil an Bariumsulfat.

Die organischen Additive können sowohl in flüssiger als auch in fester Form verwendet werden. Das mit organischem Additiv belegte trockene Bariumsulfat kann einer Feinstmahlung, vorzugsweise mittels einer Prall- oder Strahlmühle unterworfen werden.

Das Bariumsulfat kann durch Vermischen von BaCl₂- oder Ba(OH)₂-Lösung mit Na₂SO₄-Lösung oder H₂SO₄ ausgefällt werden.

Um eine optimale Verteilung von flüssigen organischen Additiven auf der Oberfläche der Bariumsuifatteilchen zu erzielen, wird die organisches Additiv enthaltende Lösung der BaSO₄-suspension zugegeben und die Mischung wird mittels eines Dispergierapparates homogenisiert.

Von besonderem Vorteil ist, dass sich mittels der erfindungsgemäß nachbehandelten Bariumsulfatteilchen Masterbatches (Pigment- und Füllstoffkonzentrate) und Compounds (Mischungen) von thermoplastischen Kunststoffen herstellen lassen, in denen die Bariumsulfatteilchen so aufgezeichnet dispergiert sind, dass daraus hochwertige Produkte ohne besonderen zusätzlichen Aufwand herstellbar sind. Die hervorragende Dispergierbarkeit der erfindungsgemäß nachbehandelten Bariumsulfatteilchen in Kunststoffen wird dadurch deutlich, dass bei diesen Bariumsulfat enthaltenden Kunststoffen keine Stippen auftreten, und sich bei einem Druckfiltertest der Filter nicht zusetzt.

Die erfindungsgemäßen Bariumsulfatteilchen sind insbesondere für die Dispergierung in Kunststoffmassen, wie Thermoplasten, Duroplasten und Elastomeren geeignet Verwendung finden die so behandelten Kunststoffe bei der Herstellung von Fasern, Beschichtungsstoffen, Klebstoffen, Folien, Filmträgern und dergleichen.

Der Gegenstand der Erfindung wird anhand der folgenden Beispiele näher erläutert: Zuerst wurde eine BaSO₄-Suspension hergestellt. Dazu wurden eine wässrige Lösung von Na₂SO₄ und eine wässrige Lösung von BaCl₂ in einem Molverhältnis von 1:0,98 gleichzeitig in eine Fällapparatur gefördert. Die Fällbedingungen wurden gemäß dem Stand der Technik so eingestellt, dass das gefällte BaSO₄ der wässrigen Lösung eine mittlere Teilchengröße von d₅₀ = 0,52 µm besaß. Das gefällte BaSO₄ wurde dann filtriert und mit vollentsalztem Wasser mehrmals gewaschen. Der erhaltene Filterkuchen wurde in Wasser dispergiert. Die Bariumsulfat-Suspension hatte einen Feststoffgehalt von ca. 250 g/l und wurde wie folgt weiter verarbeitet:

### Vergleichsbeispiel A

Ein Teil der Suspension wurde in einem Sprühtrockner getrocknet. Das erhaltene BaSO₄-Pulver hatte einen d₅₀ von 0,52 µm und gilt als Vergleichsprobe (Probe A).

### Beispiel 1

Ein Teil der Suspension wurde mit 1 Gew.-% (bezogen auf BaSO₄) Neopentylglycol versetzt und anschließend, wie im Vergleichsbeispiel A beschrieben, getrocknet Das erhaltene weiße BaSO₄-Pulver hatte einen d₅₀ von 0,51 µm (Probe 1) und einen Kohlenstoffgehalt von 0,1 Gew.-%.

### Beispiel 2

Ein Teil der Suspension wurde mit 1 Gew.-% (bezogen auf BaSO₄) 2,2-Dihydroxymethylbutanol-1 versetzt und anschließend, wie im Vergleichsbeispiel A beschrieben, getrocknet Das Bariumsulfatpulver hatte einen d₅₀ von 0,51 µm (Probe 2) und einen Kohlenstoffgehalt von 0,17 Gew.%.

### Beispiel 3

Ein Teil der Suspension wurde mit 1 Gew.-% (bezogen auf BaSO₄) Polyethylenglycol 2000 versetzt und anschließend, wie im Vergleichsbeispiel A beschrieben, getrocknet.

Das Bariumsulfatpulver hatte einen d₅₀ von 0,50 µm (Probe 3) und einen Kohlenstoffgehalt von 0,48 Gew.-%.

### Beispiel 4

Ein Teil der Suspension wurde mit 5 Gew.-% (bezogen auf BaSO₄) Polyethylenglycol 2000 versetzt und anschließend, wie im Vergleichsbeispiel A beschrieben, getrocknet. Das Bariumsulfatpulver hatte einen d₅₀) von 4,9 µm (Probe 4) und einen Kohlenstoffgehalt von 2,5 Gew.-%.

### Beispiel 5: Herstellung von Polyestermasterbatchen und deren Eigenschaften

In einem Doppelschneckenextruder wurden die Proben A und 1 bis 4 mit PETP (Polyethylenterephthalat) bei einer Temperatur von ca. 270 °C im Massenverhältnis von 30 : 70 (BaSO₄ : PETP) extrudiert. Dabei wurde je ein 30 %-iger Masterbatch hergestellt. Diese Masterbatches wurden einem Druckfiltertest unterzogen. Bei der Filtration der Polymerschmelzen über ein Siebpaket (bestehend aus Düse, Dichtung, Lochplatte, 14 µm-Sieb mit Stützsieb) bewirken evtl. vorhandene Pigmentagglomerate und/oder Verunreinigungen einen Druckaufbau vor dem Filter. Dieser Druckanstieg ist ein Maß für die Qualität der Polymerschmelze. Je niedriger der Druckanstieg ist, desto besser ist das Pigment im Polymer dispergiert.

Die Ergebnisse der Druckfiltertests sind in Tabelle 1 dargestellt.

**Tabelle 1**

| Probe | A | 1 | 2 | 3 | 4 |
|---|---|---|---|---|---|
| Druckfilterwert bar x cm³/g), auf ein 14 µm | | | | | |
| Sieb nach 60 min | 15,47 | 1,74 | 2,53 | 5,89 | 0,27 |

Wie aus der Tabelle ersichtlich ist, zeigt ein organisch unbehandeltes BaSO4 (Vergleichsprobe A) einen sehr hohen Druckfilterwert. Der Vergleich zwischen unbehandeltem und erfindungsgemäß behandeltem BaSO₄ (Proben 1 bis 4) zeigt, dass das behandelte BaSO₄ signifikant besser dispergierbar ist und somit wenig Material (Agglomerate) enthält, welches in Filtern hängen bleibt und zu einer Filterblockade führen würde.

### Beispiel 6: Herstellung von 18 %-igen Polyethylenterephthalat-Folien (PETP-Folien).

Die je 30 %-ige Masterbatch-Vergleichsprobe A und die erfindungsgemäße Masterbatch-Probe 1 (mit Neopentylglycol) wurden auf einen Feststoffgehalt von 18 % verdünnt und direkt zu Folien extrudiert.

Die auf Basis von unbehandeltem BaSO₄ (Probe A) hergestellte PETP-Folie enthielt deutlich sichtbar nichtdispergierbare Teilchen, die als Agglomerate vorlagen (sogenannte Stippen). Demgegenüber wies die auf Basis von behandeltem BaSO₄ (Probe 1) hergestellte PETP-Folie kaum derartige Stippen auf, was auf die erheblich bessere Dispergierbarkeit des erfindungsgemäß behandelten BaSO₄ zurückzuführen ist.

## Patentansprüche

1. Verfahren zur Herstellung von Bariumsulfat mit einer mittleren Teilchengröße d₅₀ von 0,1 bis 10 µm, ausgefällt durch Vermischung von barium- und sulfathaltiger Lösung, **dadurch gekennzeichnet, dass** der abgetrennte Filterkuchen in Wasser suspendiert, die Suspension mit organischem Additiv vermischt und dann in einem Sprüh- oder Mahltrockner getrocknet wird, wobei das organische Additiv ausgewählt wird aus einem oder mehreren der Stoffe, bzw. Stoffgruppen: Carbonsäuren, Alkohole, mehrwertige Alkohole, wie Pentaerythrit, Neopentylglycol und Trimethylpropanol, Polyalkohole wie Polypropylenglycol und Polyethylenglycol, organische Ester, wie Neopentyl-Glycol-Dibenzoat, organische Sulfone mit der Formel RSO₂R, organische Ketone (R-(C=O)-R), organische Nitrile (RCN), organische Sulfoxide (R₂-SO), organische Amide (R-(C=O)-NR'R oder R-(S=O)-ONR'R).

2. Verfahren nach Anspruch 1, **dadurch gekennzeichnet, dass** der Anteil an organischem Additiv, bezogen auf den Anteil an Bariumsulfat 0,1 bis 30 Gew.-% beträgt.

3. Verfahren nach Anspruch 2, **dadurch gekennzeichnet, dass** der Anteil an organischem Additiv, bezogen auf den Anteil an Bariumsulfat 0,1 bis 10 Gew.-%, beträgt.

4. Verfahren nach einem der Ansprüche 1 bis 3, **dadurch gekennzeichnet, dass** das mit organischem Additiv belegte trockene Bariumsulfat einer Feinstmahlung, vorzugsweise mittels einer Prall- oder Strahlmühle unterworfen wird.

5. Verfahren nach einem der Ansprüche 1 bis 4, **dadurch gekennzeichnet, dass** das Bariumsulfat durch Vermischen von BaCl₂- oder Ba(OH)₂-Lösung mit Na₂SO₄-Lösung oder H₂SO₄ ausgefällt wird.

6. Verwendung des nach einem der Ansprüche 1 bis 5 hergestellten Bariumsulfats zur Herstellung von thermoplastischen Kunststoffzusammensetzungen, in denen die Bariumsulfatteilchen dispergiert sind.

7. Verwendung des nach einem der Ansprüche 1 bis 5 hergestellten Bariumsulfats zur Dispergierung in Kunststoffmassen zur Herstellung von Folien oder Filmträgern.

## Claims

1. A process for the preparation of barium sulphate having an average particle size d₅₀ of from 0.1 to 10 µm and precipitated by mixing barium- and sulphate-containing solutions, **characterised in that** the separated filter cake is suspended in water, the suspension is mixed with organic additive and then dried in a spray dryer or mill dryer, the organic additive being selected from one or more of the substances or groups of substances: carboxylic acids, alcohols, polyhydric alcohols, such as pentaerythritol, neopentyl glycol and trimethylpropanol, polyalcohols, such as polypropylene glycol and polyethylene glycol, organic esters, such as neopentyl glycol dibenzoate, organic sulphones corresponding to the formula RSO₂R, organic ketones (R-(C=O)-R), organic nitriles (RCN), organic sulphoxides (R₂-SO), organic amides (R-(C=O)-NR'R or R-(S=O)-ONR'R).

2. A process according to claim 1, **characterised in that** the organic additive content, based on the barium sulphate content, is 0.1 to 30 wt.%.

3. A process according to claim 2, **characterised in that** the organic additive content, based on the barium sulphate content, is 0.1 to 10 wt.%.

4. A process according to one of claims 1 to 3, **characterised in that** the dry barium sulphate covered with organic additive is subjected to a pulverising process, preferably by means of an impact mill or jet mill.

5. A process according to one of claims 1 to 4,
**characterised in that** the barium sulphate is precipitated by mixing BaCl₂ solution or Ba(OH)₂ solution with Na₂SO₄ solution or H₂SO₄.

6. Use of the barium sulphate prepared according to one of claims 1 to 5 in the production of thermoplastic plastics compositions in which the barium sulphate particles are dispersed.

7. Use of the barium sulphate prepared according to one of claims 1 to 5 for dispersion in plastics masses for the production of foils or film carriers.

## Revendications

1. Procédé de préparation de sulfate de baryum, en particules d'une taille médiane d₅₀ de 0,1 à 10 µm, précipité par mélange de solutions contenant du baryum et un sulfate, **caractérisé en ce que** l'on remet en suspension dans de l'eau le gâteau séparé par filtration, on mélange à la suspension un additif organique, puis on sèche la suspension dans un appareil de séchage par atomisation ou par broyage, ledit additif organique étant une ou plusieurs substances choisies parmi les substances et ensembles de substances suivants : acides carboxyliques, alcools, polyols comme le pentaérythritol, le néopentyl-glycol et le triméthyl-propanol, polymères d'alcool comme les polypropylèneglycol et polyéthylèneglycol, esters organiques comme le dibenzoate de néopentyl-glycol, sulfones organiques de formule RSO₂R, cétones organiques de formule R-(C=O)-R, nitriles organiques de formule R-CN, sulfoxydes organiques de formule R₂SO, et amides organiques de formule R-(C=O)-NR'R ou R-SO₂-NR'R.

2. Procédé conforme à la revendication 1, **caractérisé en ce que** la proportion pondérale d'additif organique, par rapport au sulfate de baryum, vaut de 0,1 à 30 %.

3. Procédé conforme à la revendication 1, **caractérisé en ce que** la proportion pondérale d'additif organique, par rapport au sulfate de baryum, vaut de 0,1 à 10 %.

4. Procédé conforme à l'une des revendications 1 à 3, **caractérisé en ce que** le sulfate de baryum sec, recouvert d'additif organique, est soumis à un broyage en très fines particules, réalisé de préférence au moyen d'un broyeur centrifuge ou d'un broyeur par projection en courant gazeux.

5. Procédé conforme à l'une des revendications 1 à 4, **caractérisé en ce que** le sulfate de baryum est précipité par mélange d'une solution de chlorure de baryum BaCl₂ ou d'hydroxyde de baryum Ba(OH)₂ avec une solution de sulfate de sodium Na₂SO₄ ou de l'acide sulfurique H₂SO₄.

6. Utilisation d'un sulfate de baryum, préparé selon un procédé conforme à l'une des revendications 1 à 5, en vue de la fabrication de compositions de matières thermoplastiques dans lesquelles sont dispersées des particules de sulfate de baryum.

7. Utilisation d'un sulfate de baryum, préparé selon un procédé conforme à l'une des revendications 1 à 5, en dispersion dans des masses de matière plastique destinées à la fabrication de feuilles ou de supports de film.
